# EUROPEAN PATENT SPECIFICATION

(11) **EP 0 731 996 B1**
(45) Date of publication and mention of the grant of the patent: **08.10.1997**
(21) Application number: 94909341.3
(22) Date of filing: 18.02.1994
(51) Int. Cl.: H02G 3/06

(54) **A CABLE CONDUIT FOR PROTECTED CONVEYANCE OF CABLES AND/OR PIPES**
KABELKANAL FÜR DIE GESCHÜTZTE FÜHRUNG VON KABELN UND/ODER LEITUNGEN
CONDUITE POUR CABLES DESTINEE AU PASSAGE PROTEGE DE CABLES ET/OU DE TUYAUX

(30) Priority: 26.02.1993 NO 930729
(43) Date of publication of application: 18.09.1996
(73) Proprietor: ANDREASSEN, Anders, N-3260 Larvik (NO)
(72) Inventor: ANDREASSEN, Anders, N-3260 Larvik (NO)
(74) Representative: Cline, Roger Ledlie
(86) International application number: NO9400042
(87) International publication number: WO9419852

(56) References cited:
- US-A- 4 942 271

## Description

The invention concerns a cable conduit for protected conveyance of cables and/or pipes, especially against influences from the environment, where the cable conduit is composed of sections consisting of a lower part and an upper part which can be interlocked, where the conduit sections are connected by means of intermediate coupling elements, the lower part is U-shaped in cross section, with a longitudinal extension of the U-leg on one side, and the extension has a groove for coaction with a compatible flange on the upper part, the other side of which is extended downwards.

At the present time there are several types of cable conduits known and in use which consist of concrete, plastic or wood:

The concrete conduits in the form of 1 metre long elements consist of a base part with a cover. These have a relatively high specific weight and are very expensive to lay. Additional installations are costly and they often suffer impact damage during handling. The concrete conduits cannot be used over bridges. Laying these usually results in an untidy impression since it is difficult to achieve proper alignment.

Wooden conduits are a reasonable solution. However, the use of woodwork increases the risk of cable damage: When nailing parts together (installing the cover) and when joining parts (fish joints) there is a major risk of nails being driven into the fibre optics cables. Frequent grass fires often cause fires in the wooden conduits.

The disadvantage of plastic pipes is that they have to be buried in the ground. Moreover, they cannot withstand heavy loads, particularly when the temperature is below freezing. Plastic pipes are best suited for once-and-for-all installation and they cannot be laid over bridges or in rock cuttings.

Today a combination of these solutions is employed.

There is disclosed in DE 33 22 102 a conduit system intended for mounting on to a wall or other stable, flat base. The system consists of two U-shaped conduits, where, when assembled, the upper part interlocks with the lower part, the external width/height of the lower part agreeing with the internal dimensions of the upper part.

Furthermore from SE 86 05144 a solution is disclosed where the cables in a cable conduit are protected by a thermoplastic extruded casing (upper part) with fire protection properties, this casing melting when the temperature rises and covering the cables.

There is further disclosed from DE 40 18 250 a conduit system consisting of two parts, viz. a U-shaped base part and a top cover according to the box-lid principle. The conduit lacks a joining system, and the protection only covers a fastening which is used to secure the lid to the base part.

There is yet another conduit system disclosed in GB 2 122 816 consisting of an upper part and a lower part. The lower part is U-shaped in cross section and one of the U-legs has an extension. On the extension there is a groove for coaction with a flange on the upper part.

One requirement of such cable conduits is that they should permit the laying of cables and/or pipes which need protection against fire and criminal damage. A further requirement is that such cable conduit systems should have a low specific weight, be thermally stable, be flexible and able to resist impacts, should not be electrically conductive and should be capable of withstanding high and low temperatures.

An object of the present invention is to provide a cable conduit for conveying cables and/or pipes, in which the above-mentioned disadvantages are avoided. Thus it is an object of the invention to provide a cable conduit which preferably consists of only a few standard elements with low specific weight which are extremely simple to mount/lay, and which can be equipped with various attachment and locking devices.

A further object is to provide a cable conduit which is resistant to impact and flexible and can withstand high and low temperatures, both in the form of fire-retardant and insulating material.

These objects are achieved with a cable conduit of the type mentioned in the introduction, which is characterized by the features in the patent claims presented.

By means of the invention a design of a cable conduit is obtained by simple means, which permits the cable conduits to be laid directly in gravel or crushed stone, and to be easily straightened up, since they form a connected structure.

The design according to the invention provides it with a relatively high degree of inherent rigidity and enables it to take up a certain amount of free span, depending on the cable load. By using conduits which are designed according to the invention a considerable simplification has also been achieved of the work involved in laying new cables in already-existing conduits of the type according to the invention.

The invention will now be described in more detail by means of an embodiment which is depicted in the drawing, in which:

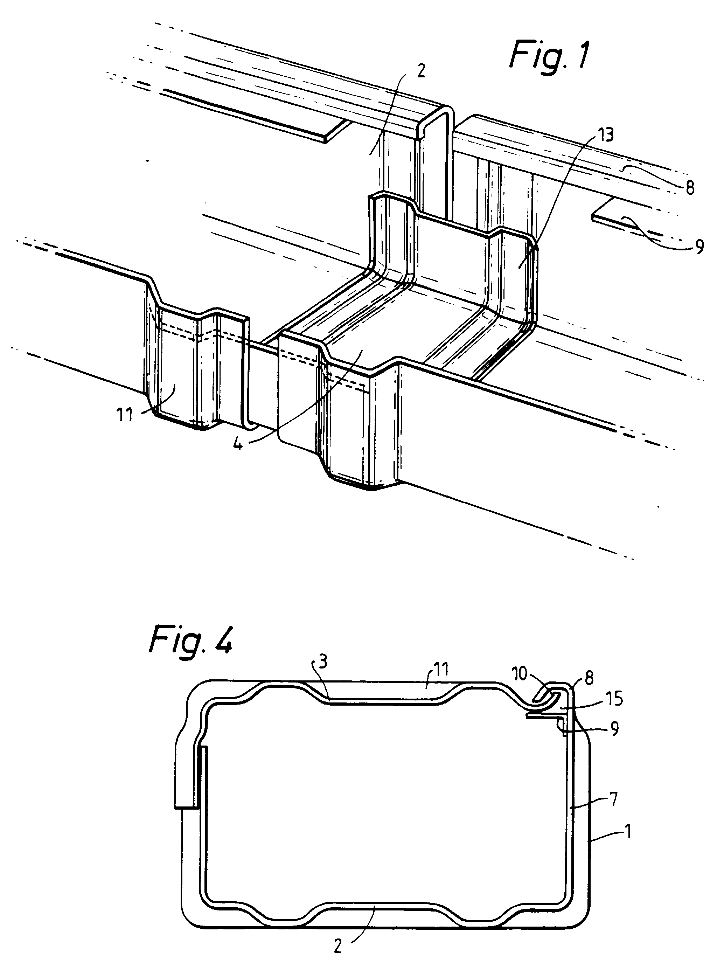

Fig. 1 is a perspective view of the lower part of two cable conduits, assembled by means of the lower part of a coupling element according to the invention.

Fig. 2 is a perspective view of the connected conduit lower parts, with a complete coupling element, and the start of the attachment of the upper part of the conduit (the top cover).

Fig. 3 is a perspective view which shows one cable conduit section complete with upper part, coupling element, and the next cable conduit without the upper part of the conduit (the top cover).

Fig. 4 is a cross section view of the cable conduit according to the invention.

Fig. 5 is a perspective view of the two parts of the coupling element according to the invention.

Fig. 6 is a centric vertical section of two cable conduit sections assembled by means of a coupling element. The horizontal section is similar to this.

In the drawing the cable conduit is generally indicated by 1, while the lower and upper parts of the conduit section are indicated by 2 and 3 respectively. Furthermore, the coupling element is indicated by 12 while the lower and upper parts are indicated by 4 and 5 respectively. The lower part 2 of the cable section is U-shaped in cross section with a longitudinal extension 7 of the U-leg on one side. The extension 7 has a groove 15 for coaction with a compatible flange 10 on the upper part 3, the other side of which is extended downwards to overlap the U-leg.

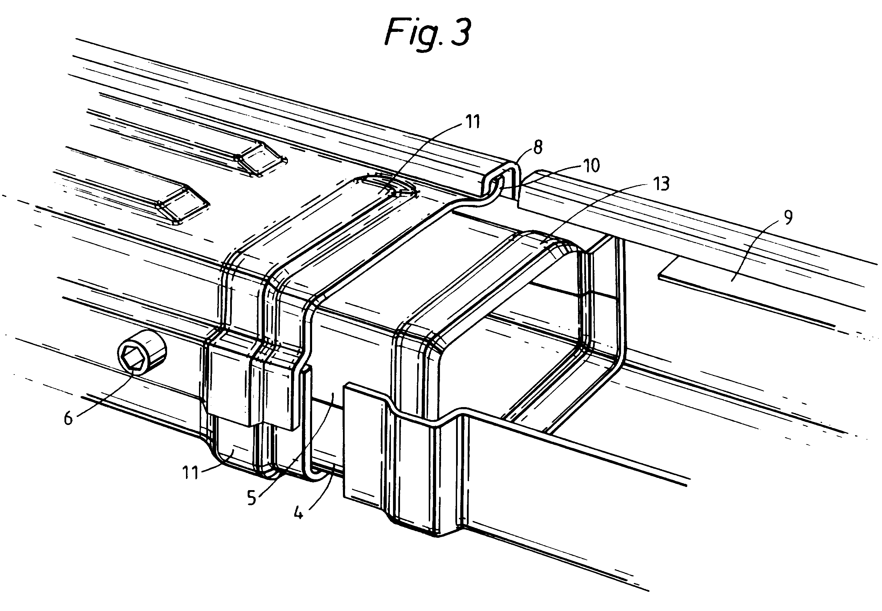

As illustrated in fig. 3 the lower part 2 and the upper part 3 have outward facing collars 11 at their end sections for coaction on the inside with a coupling element 12 which has corresponding collar profiles 13 and which is horizontally divided in the median plane and has dimensions for clamping insertion between the conduit sections 2,3 with the collars 13 located in the sections' collars 11.

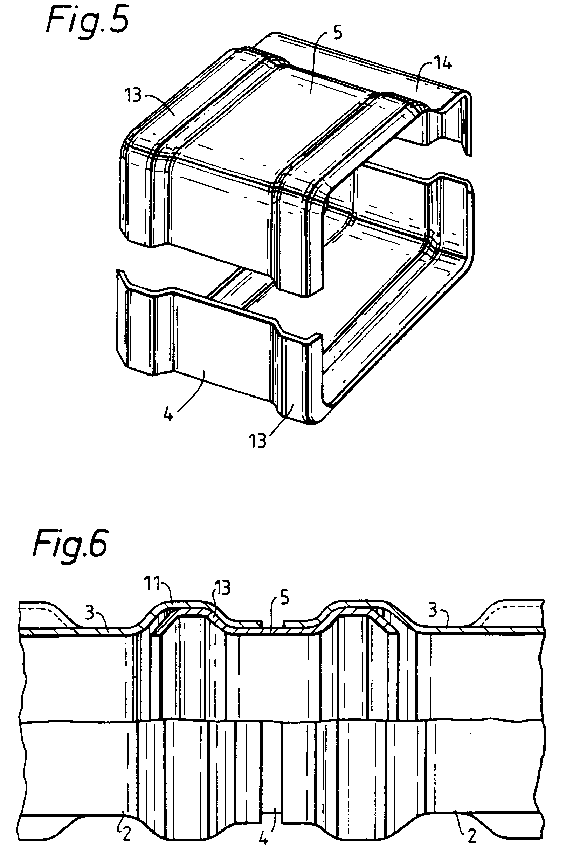

Fig. 5 illustrates that the upper part 5 of the coupling element 12 has a recess 14 to fit the shape of the grooved extension 7.

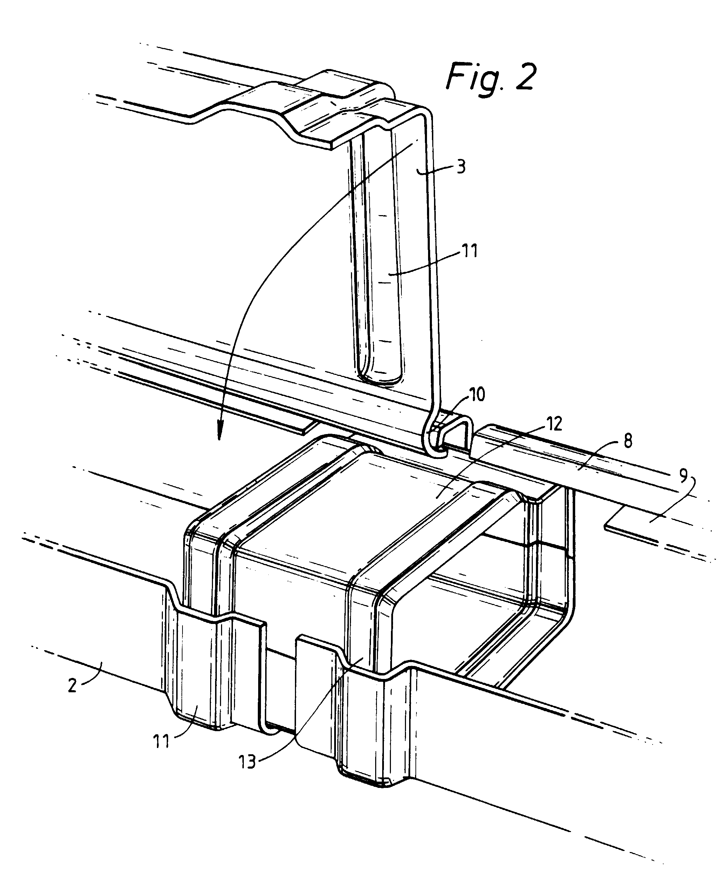

As illustrated in fig. 2 the groove 15 is composed of a U-edge 8 and a profile 9. The profile 9 may consist of, e.g., an interrupted metal profile, (in order to prevent the electrical conductivity) or of the same material as the cable conduit.

The cable conduit 1 is assembled to the desired length by laying out the lower parts 2 at the desired location and "clipping" them together by means of the lower part 4 of the coupling element. The cable conduit 1 is then ready for pipes or cables to be laid manually or automatically. As soon as the cables or pipes have been laid, the top part 5 of the joining element 12 can be pressed into position and will then hold the cables clampingly in place in the conduit, and simplify any subsequent inspection of the conduits. Finally the upper part 3 is secured in the groove 15 and may be locked in position by means of a locking device 6 to the lower part 2.

The cable conduit 1 according to the invention will reduce the influence of local conditions and the need for expertise and experience on the part of those who instal the cable conduits 1. If there is a subsequent need for further cables or pipes, it is a simple matter to remove the upper parts 3 and the upper parts 5 of the joining elements 12, and the conduits 1, in the form of the under parts 2 are then exposed, being only held together by the lower parts 4 of the connector pieces 12.

The cable conduits 1 are preferably made of a fibre-reinforced polymer. The advantage of this material is that it is not electrically conductive, and has an insignificant thermal expansion coefficient, as well as a high resistance to impact.

The connector piece 12 is designed in such a way that the floor of the entire conduit lies flush. The connector piece 12 is further designed in such a way that the cable conduit 1 can be bent and laid at a specific angle in relation to the horizontal, the groove gauge of the collars 11,13 being narrower in the connector piece 12 than in the conduit sections 2,3. The collars 11,13 are designed so as to make it difficult for water to penetrate into the cable conduit 1. If necessary, packings and the like can be provided in the collars 11,13.

The cable conduit 1 can be cast in fire-retardant material or this can be applied, or the inside can be coated with a fire-retardant/insulating material.

In the illustrated embodiments only some possible designs of the invention are illustrated, but it should be obvious that further designs of, e.g., the collars 11,13 or the groove 15 can be envisaged.

## Claims

1. A cable conduit for protected conveyance of cables and/or pipes, especially against influences from the environment, where the cable conduit (1) is composed of sections consisting of a lower part (2) and an upper part (3) which can be interlocked (6), where the conduit sections are connected by means of intermediate coupling elements (4,5), the lower part (2) is U-shaped in cross section, with a longitudinal extension (7) of the U-leg on one side, and the extension (7) has a groove (15) for coaction with a compatible flange (10) on the upper part (3), the other side of which is extended downwards,
characterized in that the said other side of the upper part (3) overlaps the lower part's (2) second U-leg, that the lower part (2) and the upper part (3) have outward facing collars (11) at their end sections for coaction on the inside with a coupling element (12) which has corresponding collar profiles (13) and is divided horizontally in the median plane and is dimensioned for clamping insertion between the channel sections with the collars (13) located in the sections' collars (11).

2. A cable conduit according to claim 1,
characterized in that the upper part (5) of the coupling element (12) has a recess (14) to fit the shape of the grooved extension (7).

3. A cable conduit according to claim 1,
characterized in that the collars (13) in the coupling element (12) are located in the outer edge.

4. A cable conduit according to claim 1,
characterized in that the groove (15) in the lower part (2) is composed of a bent end edge (8) on the U-leg and a metal profile (9).

5. A cable conduit according to claim 1,
characterized in that the conduit (1) can be bent, the track gauge of the collar (11,13) being narrower in the coupling element (12) than in the conduit sections.

6. A cable conduit according to claim 1,
characterized in that the cable conduit (1) is provided with a fire-retardant material.

## Patentansprüche

1. Kabelkanal für die geschützte Führung von Kabeln und/oder Kabelschutzrohren, insbesondere gegen die Einflüsse aus der Umwelt, wobei der Kabelkanal (1) Abschnitte aufweist, die aus einem unteren Teil (2) und einem oberen Teil (3) bestehen, die verriegelt werden können (6), wobei die Kanalabschnitte mittels der dazwischenliegenden Kopplungselemente (4, 5) verbunden werden, und wobei der untere Teil (2) einen U-förmigen Querschnitt aufweist und eine Verlängerung (7) des U-Schenkels auf einer Seite in der Längsrichtung zeigt, und wobei die Verlängerung (7) eine Nut (15) für ein Zusammenwirken mit einem kompatiblen Flansch (10) am oberen Teil (3) aufweist, dessen andere Seite sich nach unten erstreckt, dadurch gekennzeichnet, daß die andere Seite des oberen Teils (3) den zweiten U-Schenkel des unteren Teils (2) überlappt, daß der untere Teil (2) und der obere Teil (3) nach außen gerichtete Wülste (11) an ihren Endabschnitten für ein Zusammenwirken auf der Innenseite mit einem Kopplungselement (12) aufweisen, das die entsprechenden Wulstprofile (13) zeigt und horizontal in der mittleren Ebene geteilt und für ein festklemmendes Einsetzen zwischen den Kanalabschnitten so bemessen ist, daß die Wülste (13) in den Wülsten (11) der Abschnitte angeordnet werden.

2. Kabelkanal nach Anspruch 1, dadurch gekennzeichnet,daß der obere Abschnitt (5) des Kopplungselementes (12) eine Aussparung (14) aufweist, die in die Form der genuteten Verlängerung (7) paßt.

3. Kabelkanal nach Anspruch 1, dadurch gekennzeichnet, daß sich die Wülste (13) im Kopplungselement (12) im äußeren Rand befinden.

4. Kabelkanal nach Anspruch 1, dadurch gekennzeichnet, daß die Nut (15) im unteren Teil (2) einen gebogenen Rand (8) am Ende des U-Schenkels und ein Metallprofil (9) aufweist.

5. Kabelkanal nach Anspruch 1, dadurch gekennzeichnet, daß der Kanal (1) gebogen sein kann, wobei die Nutbreite der Wülste (11, 13) im Kopplungselement (12) schmaler ist als in den Kanalabschnitten.

6. Kabelkanal nach Anspruch 1, dadurch gekennzeichnet, daß der Kabelkanal (1) mit einem feuerhemmenden Material versehen ist.

## Revendications

1. Conduite pour câbles, destinée au passage protégé de câbles et/ou de tuyaux, tout particulièrement contre les influences de l'environnement,la conduite pour câbles (1) étant composée de sections composées d'une partie inférieure (2) et d'une partie supérieure (3) à verrouillage réciproque (6), les sections de la conduite étant connectées par l'intermédiaire d'éléments de couplage intermédiaires (4, 5), la partie inférieure (2) ayant une section en forme de U, avec une extension longitudinale (7) de la branche en U sur un côté, l'extension (7) comportant une rainure (15) destinée à collaborer avec une bride compatible (10) sur la partie supérieure (3), dont l'autre côté est étendu vers le bas, caractérisée en ce que ledit autre côté de la partie supérieure (3) recouvre la deuxième branche en U de la partie inférieure (2), en ce que la partie inférieure (2) et la partie supérieure (3) comportent des colliers orientés vers l'extérieur (11) au niveau de leurs sections d'extrémité, pour collaborer sur l'intérieur avec un élément de couplage (12) qui a des profils de collier correspondants (13) et est divisé horizontalement dans le plan médian, et est dimensionné de sorte à permettre une insertion par serrage des sections de canal dans les colliers (13) agencés dans les colliers des sections (11).

2. Conduite pour câbles selon la revendication 1, caractérisée en ce que la partie supérieure (5) de l'élément de couplage (12) comporte un évidement (14) destiné à s'adapter à la forme de l'extension à rainure (7).

3. Conduite pour câbles selon la revendication 1, caractérisée en ce que les colliers (13) dans l'élément de couplage (12) sont agencés dans le bord extérieur.

4. Conduite pour câbles selon la revendication 1, caractérisée en ce que la rainure (15) dans la partie inférieure (2) est composée d'un bord d'extrémité plié (8) sur la branche en U et d'un profil métallique (9).

5. Conduite pour câbles selon la revendication 1, caractérisée en ce que la conduite (1) peut être pliée, l'écartement de voie du collier (11, 13) étant plus étroit dans l'élément de couplage (12) que dans les sections de la conduite.

6. Conduite pour câbles selon la revendication 1, caractérisée en ce que la conduite pour câbles (1) comporte un matériau coupe-feu.
